# EUROPEAN PATENT APPLICATION

(11) **EP 4 116 820 A1**
(43) Date of publication of application: **11.01.2023**
(21) Application number: 21776309.3
(22) Date of filing: 08.01.2021
(51) Int. Cl.: G06F 9/445

(54) **DATA RECOVERY METHOD AND APPARATUS**

(30) Priority: 25.03.2020 CN 202010220111
(71) Applicant: Huawei Technologies Co., Ltd., Shenzhen, Guangdong 518129, (CN)
(72) Inventor: ZHOU, Yiyang, Shenzhen, Guangdong 518129 (CN); CHAO, Hui, Shenzhen, Guangdong 518129 (CN); WANG, Yang, Shenzhen, Guangdong 518129 (CN); LIN, Jiehui, Shenzhen, Guangdong 518129 (CN)
(74) Representative: Epping - Hermann - Fischer
(86) International application number: PCT/CN2021/070775
(87) International publication number: WO 2021/190082

(57) **Abstract**

This application provides a data recovery method and apparatus, and relates to the field of computer technologies. The method includes: determining first data, where the first data is application data generated when an application program runs normally; storing the first data in a handle record, where the handle record is managed by using a reference count mechanism; and when the application program is unexpectedly restarted, obtaining the handle record, and restoring the application program, based on the handle record, to a status before the application program is unexpectedly restarted. The application data generated when the application program runs normally canbe persistently stored according to the method. The application program can be restored after the application program is unexpectedly restarted, so that a status and data of the application program are consistent with those before the application program is unexpectedly restarted, and user experience is improved.

## Description

### TECHNICAL FIELD

Embodiments of this application relate to the field of computer technologies, and in particular, to a data recovery method.

### BACKGROUND

The Android operating system is an open-source system, and has been widely applied to a plurality of intelligent devices, such as a mobile phone, a tablet computer, and a wearable device. With the increasing popularity of the Android operating systems, the Android operating system is applied to more applications year by year, empowering a wealth of emerging applications. There are many uncertainties when an application program runs. For example, when the application program runs, the application program may crash, may be directly removed by a user, or may be controlled by various Android derivative systems to different extent. Because volatile data that is used in an Android system process, such as PendingIntent and IBinder, cannot be persistently stored in a memory in a serialization manner, the application program cannot be restored to a status before the application program is unexpectedly restarted. This greatly restricts an Android application developer, and affects user experience.

To resolve this problem, several solutions are mainly provided in a conventional technology:
(1) Information related to a currently running application program is parsed and extracted at the system layer, and is serialized to obtain a byte stream. Then, the byte stream is stored in a database. However, code of the system layer needs to be modified in this solution, and therefore this solution is not generally used.
(2) A process of a target application program is monitored, stack information generated when an exception occurs in the target application program is locally stored, and the target application program is restored to a previous status based on the stored stack information when the exception occurs. However, the stack information is information that records a running status of a process but cannot record data in the process. Therefore, during recovery, only the process can be recovered, but not all data in the application program, including volatile data in a memory, can be recovered.
(3) A parent process interacts with a child process for keepalive, and keepalive information is periodically sent to a main process in a pipe communication manner. When one party unexpectedly crashes, the other party can start and recover the process in a timely manner. However, this method can only recover data after one process is terminated, but cannot recover data when two processes are terminated at the same time. This method may increase communication costs, and a success rate of data recovery is affected by a communication success rate.

Therefore, how to recover volatile data in a memory to keep a process and application data after an Android application program is unexpectedly restarted consistent with those before the Android application program is unexpectedly restarted becomes an urgent problem to be resolved.

### SUMMARY

Embodiments of this application provide a data recovery method and apparatus, and relate to the field of computer technologies. The method and the apparatus are applied to resolve following problems.

When an Android application program is unexpectedly restarted, data can be recovered to improve reliability of the Android application program and user experience.

According to a first aspect, an embodiment of this application provides a data recovery method. The method includes: determining first data, where the first data is application data generated when an application program runs normally; storing the first data in a handle record, where the handle record is managed by using a reference count mechanism; and when the application program is unexpectedly restarted, obtaining the handle record, and restoring the application program, based on the handle record, to a status before the application program is unexpectedly restarted. Specifically, the first data may be defined by an application developer. The first data may be the volatile data in the memory, or may be to-be-stored data by another application developer. When the application program is unexpectedly restarted, the data is used to generate data required when the application program is restored to a status before the application program is unexpectedly restarted. After being stored in the handle record, the first data is managed in a reference count manner. In this case, if the handle record is referenced, the first data may not be released by a system, so that the first data can be persistently stored. After the application program is unexpectedly restarted, the application program may be restored based on the stored first data, so that a process and application data of the application program can be restored to those before the application program is unexpectedly restarted.

Compared with the conventional technology, this method has advantages that procedures are simple, code of a system layer does not need to be modified, a type of stored data is not limited, data is not limited to stack data, and a new keepalive process does not need to be added. This reduces communication costs. The application data generated when the application program runs normally can be persistently stored according to the method. The application program can be restored after the application program is unexpectedly restarted, so that a status and data of the application program are consistent with those before the application program is unexpectedly restarted, and user experience is improved.

In a possible implementation, the first data is volatile data that is not stored in a memory of an external storage device in a serialization manner.

Specifically, the volatile data in the memory may be to-be-triggered context data, remote object interface data, a file descriptor, and the like.

In a possible implementation, that the handle record is managed by using a reference count mechanism includes referencing the handle record by using a first system interface.

In a possible implementation, the referencing the handle record by using a first system interface may be setting a scheduled job for the handle record, where the scheduled job includes a one-time job or a periodic job.

Specifically, the first system interface may be an AlarmManager in a system component. An ultra-long alarm is set by using the AlarmManager to ensure that the scheduled job is not triggered, or a periodic alarm is set to ensure that the handle record is referenced and not released. It may be understood that a JobScheduler in the system component may also implement a function the same as that of the AlarmManager.

In a possible implementation, the referencing the handle record by using a first system interface may be setting a trigger condition for the handle record.

Specifically, the first system interface may be the JobScheduler in the system component. The JobScheduler may trigger a job by setting the trigger condition, for example, low power or a terminal device accesses a network. In this embodiment of this application, the handle record can be held by setting a condition that cannot be triggered, for example, ultra-long time and network disconnection and sleep.

In a possible implementation, the referencing the handle record by using a first system interface may be setting a notification job for the handle record, where the notification job includes a persistent notification or a non-persistent notification.

Specifically, the first system interface may be a NotificationManager in the system component, and the notification job is set by using the NotificationManager. After the notification job is set, a message may be displayed on a status bar. The persistent notification is a notification that may not disappear after being operated on the status bar. A non-persistent notification is a notification that may automatically disappear after being clicked. It may be understood that the handle record may be held for a long time in a persistent notification manner, and may be released in a non-persistent notification manner after a notification event is clicked.

Specifically, the handle record may be a to-be-triggered object in the system. It may be understood that the handle record may alternatively be another resource that can be referenced in the system. This is not limited in this application. It should be noted that, in this embodiment of this application, the handle record may be referenced by using another method. This is not limited in this application.

The handle record may not be released by the system when being referenced by using the first system interface. This achieves an objective of persistently storing the volatile data in the memory.

In a possible implementation, the storing the first data in a handle record includes storing the first data in a layer-based and bucket-based manner.

Specifically, in a process of storing the first data, the first data may be stored in the layer-based and bucket-based manner by using a second system interface. A capacity of each bucket is fixed. During storing, if one bucket is full, one new bucket may be generated. When new first data needs to be stored each time, all existing buckets are sequentially traversed to check whether there is sufficient space for storing the new first data. If there is sufficient space, the first data is stored in a bucket having sufficient space. If there is no sufficient space, one new bucket is created to store the new first data.

According to the bucket-based storing manner, storage space can be fully used. In addition, because the application data in the running application program may change, the stored data may be updated. When the data is updated, only a bucket including the to-be-updated data needs to be found, and the corresponding data is updated without updating all data. This reduces a data amount to be updated, and minimize impact when the data fails to be updated. Therefore, reliability of data update is improved.

It should be noted that the capacity of the bucket may not be limited, and all data related to the handle record may be stored in the bucket. Compared with this method, using a plurality of buckets needs to update a larger data amount and leads to larger impact when the data fails to be updated, because all data in the buckets needs to be updated during updating.

In a possible implementation, the storing the first data in a handle record includes:
establishing a bucket-based mapping table, where the bucket-based mapping table includes a correspondence between at least one keyword and at least one bucket addressing; the keyword is a unique identifier of the first data, and the bucket addressing is a variable pointing to a storage location of the first data; and the bucket-based mapping table is used to find a storage location of the first data in a bucket based on the keyword when data is updated or deleted.

In a possible implementation, the bucket addressing may be a bucket number. The bucket number is a number of one bucket allocated to the first data.

In another possible implementation, the bucket addressing may alternatively be a combination of the bucket number and a bucket key value. The bucket number is a bucket number allocated to the first data. The bucket key value is a location of the first data in the bucket.

It may be understood that, in a subsequent data update process after the bucket-based mapping table is established, a specific location of to-be-updated data may be accurately found based on the mapping table to update the data. This improves data update efficiency. If the bucket addressing includes the bucket number and the bucket key value, linear search does not need to be performed in a data search process. Therefore, the efficiency is higher.

In a possible implementation, the storing the first data in a handle record further includes updating the bucket-based mapping table after new data is stored each time. The bucket-based mapping table may be located at a topmost layer of the first data stored in the layer-based and bucket-based manner, or may be stored in other space of the system. Specifically, when the data is stored, the system may determine whether to store the data in a top-layer bucket. The top-layer bucket may be predefined by the system when being generated. If there is the top-layer bucket, after the first data is stored in a layer-2 bucket, the layer-2 bucket is stored into the top-layer bucket by using the second system interface, and the bucket-based mapping table is updated. If there is no top-layer bucket, one top-layer bucket is generated. After the first data is stored, the layer-2 bucket is stored into the top-layer bucket by using the second system interface, and the bucket-based mapping table is updated.

It may be understood that, to improve utilization of the storage space, when the first data is stored in the layer-2 bucket, the existing buckets may be first traversed to check whether there is sufficient space to store the first data. If there is sufficient space, the first data is stored in a bucket having sufficient space. If there is no sufficient space, a new layer-2 bucket is generated for storage.

It may be understood that, in a process of storing the data, the data may be stored in a layer-3 bucket or buckets at more layers based on a factor such as a data amount.

In a possible implementation, the referencing the handle record by using a first system interface includes referencing, by using the first system interface, the topmost layer of the first data stored in the layer-based and bucket-based manner Specifically, when the handle record is referenced by using the first system interface, the topmost layer of the first data stored in the layer-based and bucket-based manner is referenced, so that the topmost layer in the layer-based and bucket-based manner may not be released. However, data stored in each bucket may be found by using the layer-2 bucket stored in the top-layer bucket, to reference the entire handle record.

In a possible implementation, the method provided in this embodiment of this application further includes: when the application program runs normally, updating or deleting the first data based on the bucket-based mapping table, to keep the first data consistent with application data in the application program running in a latest status.

The stored first data can be consistent with data of the application program in real time by updating and deleting the first data, so that the application program can be restored to the latest status when the application program is unexpectedly restarted.

In a possible implementation, when the application program is unexpectedly restarted, obtaining the handle record and restoring the application program, based on the handle record, to a status before the application program is unexpectedly restarted includes: obtaining the handle record of the application program by using the second system interface based on an application identifier, where the application identifier is a unique identifier used to identify the application program; and parsing the handle record, and recovering data in the handle record to the application program.

It should be noted that the application identifier one-to-one corresponds to the handle record of the application program. In a process of recovering the first data, the handle record of the application program may be found based on the application identifier, to perform layered parsing and recovery. Specifically, a topmost layer of the handle record is first parsed to obtain the layer-2 bucket of the first data, the layer-2 bucket is parsed to find an entity object storing the first data, and layer-by-layer recovery is performed to complete an entire recovery process.

Specifically, the second system interface may be an interface method such as getBroadcast, getService, or getActivity. It may be understood that the second system interface may also be another interface method for obtaining the handle record.

It may be understood that, in the process of storing the data, the data may be stored in the layer-3 bucket or the buckets at more layers based on the factor such as the data amount. Correspondingly, in a recovery process, the layer-3 bucket or the buckets at more layers need to be parsed for recovery.

According to this method, the application program can be restored to the status before the application program is unexpectedly restarted, so that user experience is improved.

According to a second aspect, for the method provided in this application, an embodiment of this application further provides a data recovery apparatus. The apparatus has functions of implementing any method provided in the first aspect. Those functions may be implemented by hardware, or by executing corresponding software through the hardware. The hardware or the software includes one or more modules corresponding to the foregoing functions. The apparatus may exist in a form of a chip product. The data recovery apparatus may be specifically a terminal, or may alternately be a fixed or removable functional module disposed in the terminal.

According to a third aspect, an embodiment of this application provides a terminal. The terminal includes a processor and a memory. The memory is configured to store a software program. The processor is configured to read the software program stored in the memory to perform the method provided in any one of the implementations of the first aspect. According to a fourth aspect, an embodiment of this application provides a storage medium, including a computer program. When running on one or more processors, the computer program is configured to implement the method provided in any one of the implementations of the first aspect.

According to a fifth aspect, an embodiment of this application provides a computer program product, including a computer program. When running on one or more processors, the computer program is configured to implement the method provided in any one of the implementations of the first aspect.

For a technical effect brought by any one of the design manners in the second aspect to the fifth aspect, refer to the technical effect brought by different design manners in the first aspect. Details are not described herein again.

### BRIEF DESCRIPTION OF DRAWINGS

To describe the technical solutions in embodiments of this application or in conventional technologies more clearly, the following briefly introduces the accompanying drawings used in describing the embodiments or conventional technologies. It is clearly that the accompanying drawings in the following description show some embodiments of this application, and a person of ordinary skill in the art may still derive other drawings from these accompanying drawings without creative efforts.
FIG. 1 is a schematic diagram of a structure of a terminal device to which an embodiment of this application is applied;
FIG. 2 is a schematic diagram of an architecture of an Android system according to an embodiment of this application;
FIG. 3 is a schematic flowchart of a data recovery method according to an embodiment of this application;
FIG. 4 is a schematic diagram of relationships among PendingIntent, Intent, and PendingIntentRecord according to an embodiment of this application;
FIG. 5 is a schematic flowchart of layer-based storage according to an embodiment of this application;
FIG. 6 is a schematic diagram of an effect of layer-based storage according to an embodiment of this application;
FIG. 7 is a schematic flowchart of restoring an application program based on data stored in a layer-based manner according to an embodiment of this application;
FIG. 8 is a schematic flowchart of using an AlarmManager to set an alarm to hold PendingIntent for data recovery according to an embodiment of this application;
FIG. 9 is a schematic flowchart of using a JobScheduler to hold PendingIntent for data recovery according to an embodiment of this application;
FIG. 10 is a schematic flowchart of using a NotificationManager to set a notification to hold PendingIntent for data recovery according to an embodiment of this application; and
FIG. 11 is a schematic diagram of a data recovery apparatus according to an embodiment of this application.

### DESCRIPTION OF EMBODIMENTS

The following clearly describes the technical solutions in embodiments of this application with reference to the accompanying drawings in embodiments of this application. Clearly, the described embodiments are some but not all of embodiments of this application. All other embodiments obtained by a person of ordinary skill in the art based on embodiments of this application without creative efforts shall fall within the protection scope of this application.

In the descriptions of embodiments of this application, "a plurality of' means two or more than two unless otherwise specified. The term "and/or" or the character "/" in this application describes only an association relationship for describing associated objects and represents that three relationships may exist. For example, A and/or B or A/B may represent the following three cases: Only A exists, both A and B exist, and only B exists.

In the following, some terms in this application are described, to help a person skilled in the art have a better understanding.
(1) Volatile data in a memory is data in a system that is hard to be persistently stored in an external memory in a serialization manner, for example, object data, such as PendingIntent, IBinder, and WakeLock in an Android system. The volatile data in the memory mentioned in this application may also be other to-be-stored data determined by a developer. When an application program is unexpectedly restarted, the data is used to generate data required when the application program is restored to a status before the application program is unexpectedly restarted.
(2) Bucketing: A group of data is stored in different buckets by using a keyword. In this way, the data may be classified and stored in a bucket-based manner.
(3) ActivityManagerService: AMS for short, is the most important core service of Android. AMS is responsible for starting, switching, and scheduling four components in the system: an activity, a service, a broadcast receiver, and a content provider, and managing and scheduling an application process. Responsibilities of the AMS are similar to those of a process management and scheduling module in an operating system. AMS is created when SystemServer executes a run() method and runs in a standalone process.
(4) Reference count is a memory management technology in a computer programming language, and is a process of storing a quantity of times that a resource (may be an object, a memory, a disk space, or the like) is referenced and releasing the resource when the quantity of times is zero. The resource can be automatically managed by the reference count technology. In addition, the reference count may further refer to a garbage collection algorithm for recycling an unused resource by using the reference count technology.

In the following description, the PendingIntent is a specific form of the foregoing bucketing. The following describes a data recovery process by using an example in which the volatile data in the memory is used as first data.

An embodiment of this application provides a data recovery method. The method may be applied to a terminal device. The terminal device may also be referred to as user equipment (User Equipment, UE), a mobile station (Mobile Station, MS), a mobile terminal (Mobile Terminal), and the like. Optionally, the terminal device may have a capability of communicating with one or more core networks by using a radio access network (Radio Access Network, RAN). For example, the terminal device may be a mobile phone (or referred to as a "cellular" phone), or a computer with mobility. For example, the terminal device may alternatively be a portable mobile apparatus, a pocket-sized mobile apparatus, a handheld mobile apparatus, a computer built-in mobile apparatus, or an in-vehicle mobile apparatus.

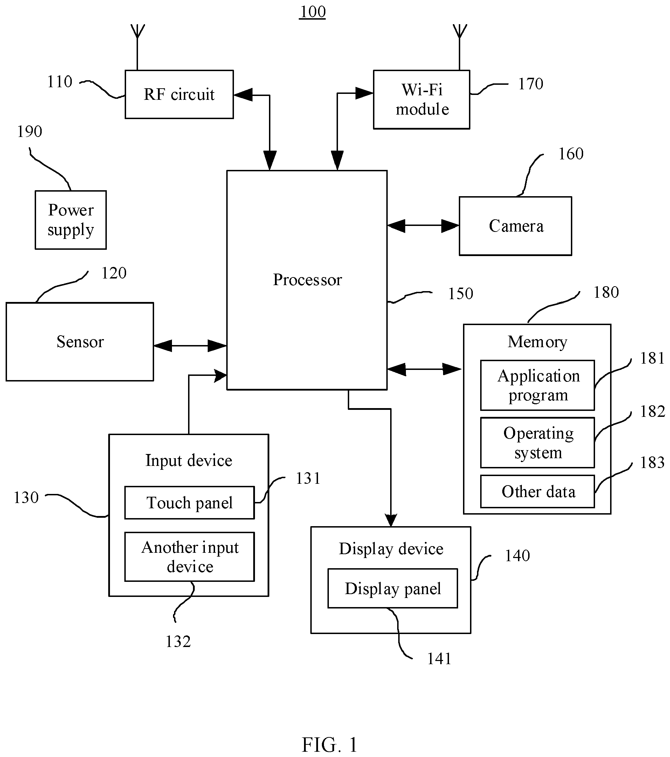

FIG. 1 is a schematic diagram of a structure of a terminal device. Refer to FIG. 1. The terminal device 100 includes a memory 180, a processor 150, and a display device 140. The memory 180 stores a computer program, and the computer program includes an operating system program 182, an application program 181, and the like. The processor 150 is configured to read the computer program from the memory 180, and then perform a method defined by the computer program. For example, the processor 150 reads the operating system program 182 to run the operating system on the terminal device 100 and implement various functions of the operating system; or reads one or more application programs 181 to run the application on the terminal device.

The processor 150 may include one or more processors. For example, the processor 150 may include one or more central processing units, or include one central processing unit and one graphics processing unit. When the processor 150 includes a plurality of processors, the plurality of processors may be integrated into a same chip, or may be independent chips. One processor may include one or more processing cores.

In addition, the memory 180 further stores other data 183 in addition to the computer program. The other data 183 may include data generated when the operating system program 182 or the application program 181 runs. The data includes system data (for example, a configuration parameter of the operating system) and user data. For example, data cached in an application program started by a user is typical user data.

The memory 180 usually includes an internal memory and an external memory. The internal memory may be a random access memory (RAM), a read-only memory (ROM), a cache (CACHE), or the like. The external memory may be a hard disk, an optical disc, a USB drive, a floppy disk, a flash memory, a tape drive, or the like. The computer program is usually stored in the external memory. Before processing, the processor may load the computer program from the external memory to the internal memory.

The operating system program 182 includes a computer program that may implement the data recovery method provided in embodiments of this application. After the processor 150 reads and runs the operating system program 182, the operating system may have a function of restoring the application program to a status before the application program is unexpectedly restarted in this embodiment of this application.

The terminal device 100 may further include an input device 130, configured to receive input digital information, character information, or a contact touch operation/non-contact gesture, and generate signal input and the like that are related to user settings and function control of the terminal device 100.

The terminal device 100 may further include a display device 140. The display device 140 includes a display panel 141, configured to display information entered by a user or information provided for a user, various menu interfaces of the terminal device 100, and the like. In some other embodiments, a touch panel 131 may cover the display panel 141 to form a touch display screen.

In addition to the foregoing modules, the terminal device 100 may further include: a power supply 190, configured to supply power to other modules; and a camera 160, configured to take a photo or a video. The terminal device 100 may further include one or more sensors 120, such as an acceleration sensor and a light sensor. The terminal device 100 may further include a radio frequency (Radio Frequency, RF) circuit 110, configured to communicate with a wireless network device through a network, and may further include a Wi-Fi module 170, configured to communicate with other devices through Wi-Fi.

A software system of the terminal device shown in FIG. 1 of this application may use a layered architecture. In this embodiment of this application, for example, an Android operating system is used to describe the software system of the terminal device.

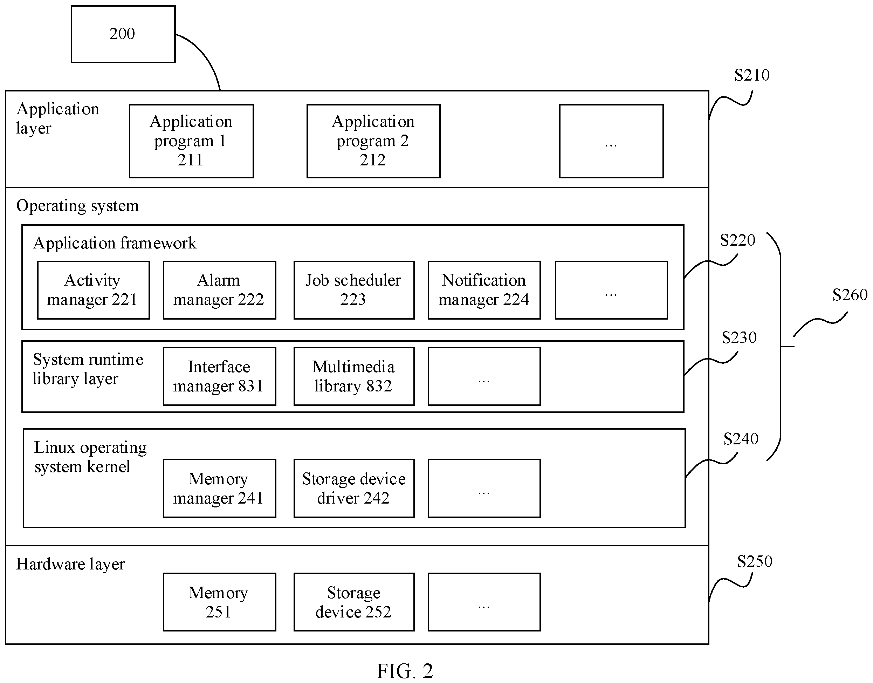

FIG. 2 is a schematic diagram of an architecture of an Android system according to an embodiment of this application. A computer system 200 may be disposed on the terminal device, or may be disposed on another type of computer device.

The Android system includes an application program layer 210, an application framework layer 220, a system runtime library layer 230, a Linux operating system kernel layer 240, and a hardware layer 250.

The application program layer 210 may include one or more application programs, for example, a camera, an SMS message, a contact, and a third-party application program. The third-party application program may include WeChat, a map, navigation, music, and the like.

The application framework layer 220 may include an ActivityManager, an AlarmManager a Job Scheduler, a NotificationManager, and the like. The application framework layer 220 provides, for a developer, an application programming interface (application programming interface, API) required for developing the application program, and supports the developer to replace or add an application based on the API.

The system runtime library layer 230 may include an interface manager 231, a multimedia library 232, and the like. The Linux operating system kernel layer 240 provides a core and management of the operating system, including a memory manager 241, a storage device driver 242, and the like.

The hardware layer 250 may include a memory 251, a storage device 252 (equivalent to the memory 180 in FIG. 1), and the like.

The following describes an example of working procedures of software and hardware of the terminal device with reference to a data recovery method in embodiments of this application.

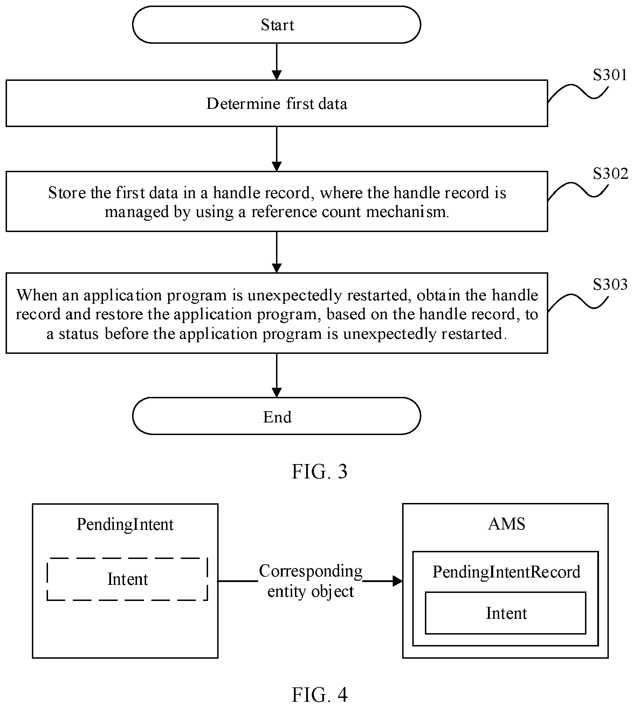

FIG. 3 is a schematic flowchart of a data recovery method according to an embodiment of this application. The method includes:
301: Determine first data, where the first data is application data generated when an application program runs normally.
302: Store the first data in a handle record, where the handle record is managed by using a reference count mechanism.
303: When the application program is unexpectedly restarted, obtain the handle record and restore the application program, based on the handle record, to a status before the application program is unexpectedly restarted.

The following describes the method provided in this embodiment of this application by using an example in which volatile data in a memory is stored in an Intent data structure. It may be understood that the volatile data in the memory is data in the first data.

In the Android system, PendingIntentRecord stored in an AMS exists in a form of reference count. This object may not be removed when being referenced. Based on this principle, this embodiment of this application describes a method for carrying the volatile data in the memory by using Intent in PendingIntent, storing the volatile data in the memory in an Android system process memory, and restoring a process based on the volatile data stored in the memory. Before a specific procedure is described, relationships among the PendingIntent, the Intent, and the PendingIntentRecord are first described. FIG. 4 is a schematic diagram of relationships among PendingIntent, Intent, and PendingIntentRecord according to an embodiment of this application.

The Intent is an intent, and a thing to be done. Intent is immediately executed. The Intent is a message transfer object, and may be used to transfer an operation request from another application component. The Intent may further carry data information by using extra.

The PendingIntent is a description of the Intent, and a mechanism that asynchronously excites the Intent. It does not immediately execute a behavior, but executes a specified behavior only after some conditions are met or some events are triggered.

There is only a matching relationship, instead of aggregation, between the Intent and the PendingIntent. The Intent is cached in the AMS. After excitation semantics of the PendingIntent is transferred to the AMS, the AMS attempts to find and deliver several intents corresponding to the PendingIntent.

The PendingIntentRecord is an entity object corresponding to the PendingIntent in the AMS. The PendingIntent references the PendingIntentRecord.

The following describes a procedure of storing the volatile data in the memory in a running procedure of the application program.

When developing the third-party application, the developer determines the first data to be stored. The data may be volatile data, or may be other data that can regenerate to-be-recovered information. The following example describes the volatile data in the memory.

In the running procedure of the application program, the to-be-stored volatile data in the memory in the process may be written into a carrier that can transmit data. For example, the to-be-stored data may be written into the Intent data structure in the Android operating system through putExtra.

It may be understood that, because the Android operating system limits an amount of data invoked by a system interface when data is transferred, the data may be stored in a layer-based and bucket-based manner in the storage procedure. The following uses a layer-2 PendingIntent structure to describe the procedure of this application.

Top-layer PendingIntent: The top-layer PendingIntent is used to manage layer-2 PendingIntent nodes. After the data is stored, all layer-2 PendingIntents are stored in the Intent of the top-layer PendingIntent.

It should be noted that, in a procedure of storing the PendingIntents in the Intent of the top-layer PendingIntent, a quantity of the PendingIntents may be or may not be stored. This is not limited in this embodiment of this application. Layer-2 PendingIntent: Used to store the first data, especially the volatile data in the memory.

It may be understood that, in the procedure of storing the data, the data may be stored in a layer-3 PendingIntent or PendingIntent structures at more layers based on a factor such as the data amount.

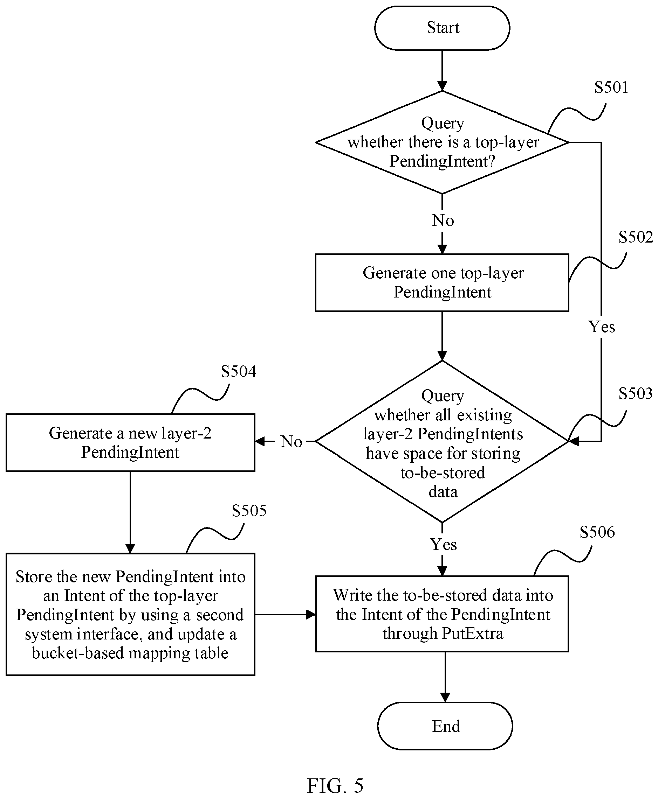

FIG. 5 is a schematic flowchart of layer-based storage of Pendinglntent.

Refer to FIG. 5. FIG. 5 is a specific schematic flowchart of storing the first data in the handle record in the step S302 of the data recovery method provided in this embodiment of this application, where the handle record is managed by using the reference count mechanism. The method includes:
Step S501: Query whether there is the top-layer PendingIntent.

If there is the top-layer PendingIntent, perform S503.

If there is no top-layer PendingIntent, perform S502.

Step S502: Generate one top-layer PendingIntent, and continue to perform step S503.

Before the system stores the volatile data in the memory, the system determines whether there is the top-layer PendingIntent. For example, the PendingIntent may be defined by using TOP_LEVEL. In this application, PendingIntent numbered 0 is used as the top-layer PendingIntent. If there is no top-layer PendingIntent, the system generates the PendingIntent numbered 0, and then continues to perform the step of storing the data in the layer-2 PendingIntent. It may be understood that the number of the top-layer PendingIntent may also be another number defined by TOP LEVEL, and 0 herein is merely an example.

Step S503: Query whether all existing layer-2 PendingIntents have space for storing the to-be-stored data:
If the existing layer-2 PendingIntents have space, perform step S506.

If the existing layer-2 PendingIntents do not have space, perform step S504.

Step S504: Generate a new PendingIntent, and continue to perform step S505.

A data amount that can be stored in an Intent corresponding to each PendingIntent is determined by the system. In a procedure of storing the volatile data in the memory into the Intent corresponding to the PendingIntent, one PendingIntent is first generated. For ease of understanding, the PendingIntent is numbered 1. If PendingIntent numbered 1 is full and there is to-be-stored volatile data in the memory, a next PendingIntent is generated and numbered 2 for continuous storage until the to-be-stored volatile data in the memory is stored.

When new volatile data in the memory needs to be stored each time, the current k PendingIntents (numbered from 1 to k) are sequentially traversed to check whether there is sufficient space for storing the new volatile data in the memory. If there is the sufficient space, the volatile data in the memory is stored in the PendingIntent having sufficient space. If there is no sufficient space, a new PendingIntent is created and numbered k+1, and then the new volatile data in the memory is stored in an Intent of the PendingIntent.

It may be understood that the foregoing numbers 1 and 2 are merely examples, and do not indicate numbering from 1 in an ascending manner during a specific implementation. During the implementation, the PendingIntent can be numbered by using RequestCode.

Step S505: Store the new PendingIntent into the Intent of the top-layer PendingIntent by using a second system interface, such as getBroadcast, getService, or getActivity, update a bucket-based mapping table, and continue to perform step S506.

Step S506: Write the to-be-stored data into the Intent corresponding to the PendingIntent through the PutExtra.

This procedure ends.

In this step, the layer-2 PendingIntent and the quantity of PendingIntents need to be stored in the Intent of the top-layer PendingIntent, that is, the PendingIntent numbered 0. If the number of the top-layer PendingIntent is a random value, a specific value of the number may be stored by using RequestCode. It may be understood that a specific bucket, that is, a specific PendingIntent, may be found based on the RequestCode. In the storing procedure, the system may establish a bucket-based mapping table. The bucket-based mapping table includes a correspondence between a keyword of at least one piece of volatile data in the memory and at least one bucket addressing. The keyword is a unique identifier of one piece of volatile data in the memory, and the bucket addressing is a variable pointing to a storage location of the one piece of volatile data in the memory. The bucket-based mapping table is used to find a storage location of the one piece of volatile data in the memory in a bucket based on the keyword when data is updated or deleted. The following uses a bucket number and a location in a bucket including corresponding data as an example to describe the bucket addressing. The bucket number is a number of the corresponding PendingIntent. The bucket-based mapping table may be located at a topmost layer of the bucket, or may be stored in another place of the system. After each volatile data in the memory is stored, a correspondence between a keyword of each volatile data in the memory and a number of PendingIntent, and a number of the volatile data in the memory in the bucket need to be stored in the bucket-based mapping table for maintenance. This table may be used during subsequent data updating and deletion. If the volatile data in the memory needs to be subsequently updated or deleted, it is only necessary to find a number of corresponding PendingIntent in the table. In the Intent of the corresponding PendingIntent (at the layer 2), update or delete the corresponding volatile data in the memory based on a number of the volatile data in the memory in the bucket, without updating volatile data in the memory in an Intent corresponding to another PendingIntent. The keyword may be a hash value.

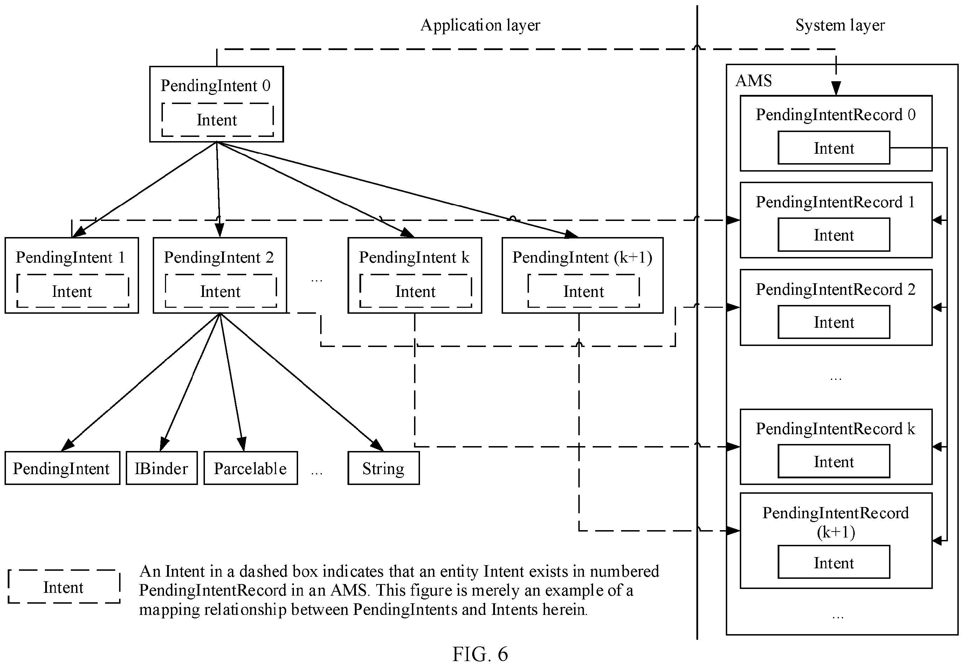

FIG. 6 is a schematic flowchart of an effect of layer-based storage.

After being stored by using the layer-based PendingIntent, the volatile data in the memory may be referred to as the handle record. In this embodiment of this application, the system handle record may be held by using a first system interface, to ensure that the handle record is not released. For example, the top-layer PendingIntent may be held by setting an ultra-long alarm through an AlarmManager interface provided in the Android system, by setting a notification through a NotificationManager, by setting a job, which is difficult to trigger, through a JobScheduler, or the like. In this way, the corresponding PendingIntent may not be released in the AMS.

It may be understood that, in a real-time running procedure of the application program, volatile data in a memory related to the application program changes. In this case, the stored volatile data in the memory needs to be updated. The volatile data in the memory may be stored in the layer-based PendingIntent. This is equivalent to storing all volatile data in the memory into an Intent of one PendingIntent. This is more efficient in updating data. In this embodiment of this application, the handle record may be obtained by using a system interface to update data. For example, the top-layer PendingIntent may be obtained, based on a FLAG_UPDATE_CURRENT parameter, by using a system interface, for example, getBroadcast, getService, or getActivity, to update data of the PendingIntent.

It should be noted that, this system interface method such as getActivity is perceivable to a user, and a corresponding Activity interface may be displayed.

Based on the bucket-based mapping table established in the procedure of storing the volatile data in the memory, when the volatile data in the memory needs to be updated or deleted, the number of the PendingIntent in which the to-be-updated volatile data in the memory is located may be first found in the bucket-based mapping table. Then, the PendingIntent corresponding to the number may be found at the layer 2, and in the Intent of the PendingIntent, the corresponding volatile data in the memory may be updated or deleted based on the number of the volatile data in the memory in the bucket. In this procedure, the volatile data in the memory in the Intent corresponding to another PendingIntent with another number may not be affected and updated.

The following describes the data recovery procedure after the application program is unexpectedly restarted.

When the application program is unexpectedly restarted, in this embodiment of this application, the application program may be restored, based on the volatile data in the memory, to a status before the application program is unexpectedly restarted. When the volatile data in the memory is recovered, layer-based recovery parsing needs to be performed. The topmost layer of the handle record, that is, the topmost layer of the PendingIntent is first parsed, and then recovery is performed layer by layer. To be specific, the layer-2 PendingIntent is first parsed by using the Intent of the top-layer PendingIntent, and then the volatile data in the memory is parsed by using the Intent of the layer-2 PendingIntent. The entire recovery procedure ends.

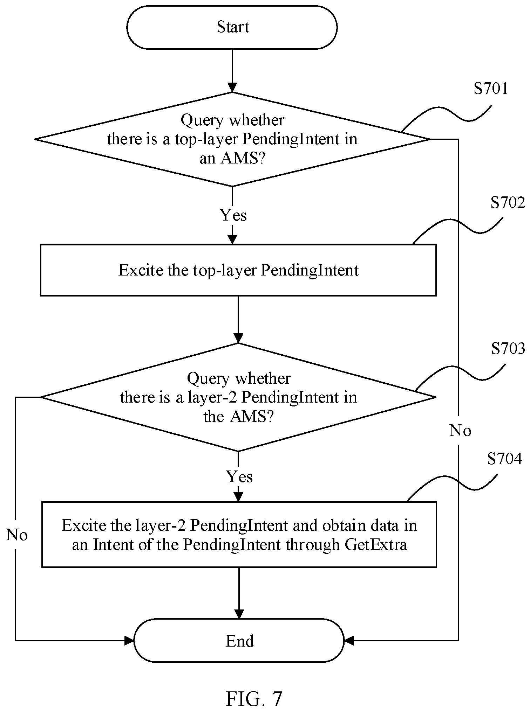

FIG. 7 is a schematic flowchart of restoring an application program based on data stored in a layer-based manner.

Refer to FIG. 7. FIG. 7 is a specific schematic flowchart of the step S303 of the data recovery method provided in this embodiment of this application. In the step S303, when the application program is unexpectedly restarted, obtain the handle record and restore the application program, based on the handle record, to a status before the application program is unexpectedly restarted. The method includes:
Step S701: Query whether there is the top-layer PendingIntent in the AMS.

If there is the top-layer PendingIntent, perform S702.

If there is no top-layer PendingIntent, this procedure ends.

Step S702: Excite the top-layer PendingIntent, and continue to perform step S703.

Step S703: Query whether there is the layer-2 PendingIntent in the AMS.

If there is the layer-2 PendingIntent, perform step S704.

If there is no layer-2 PendingIntent, this procedure ends.

Step S704: Excite the layer-2 PendingIntent and obtain data in the Intent of the PendingIntent through GetExtra. This procedure ends.

When the data is recovered after the application program is unexpectedly restarted, a handle may be obtained by using the second system interface. For example, a PendingIntent record that is stored in the AMS may be obtained, based on a parameter that is set to FLAG_NO_CREATE by using the interface method, such as getBroadcast, getService, or getActivity in the Android system. The process may excite the system handle record by using a system method to obtain corresponding content. For example, the process may excite by using a send method in a PendingIntent class in the Android system. The details are as follows:
If a getBroadcast interface is used, the volatile data in the memory stored in the Intent may be parsed in a corresponding broadcast receiver.

If a getService interface is used, the data in the Intent may be parsed by an OnStartCommand method in a corresponding service.

If a getActivity interface is used, the data in the Intent may be parsed by an onResume method of a corresponding Activity. This method is perceivable to the user, and a corresponding Activity interface may be displayed.

After the procedure of storing, holding, updating, and recovering the volatile data in the memory is described, the following uses specific embodiments to describe different manners of holding the PendingIntent.

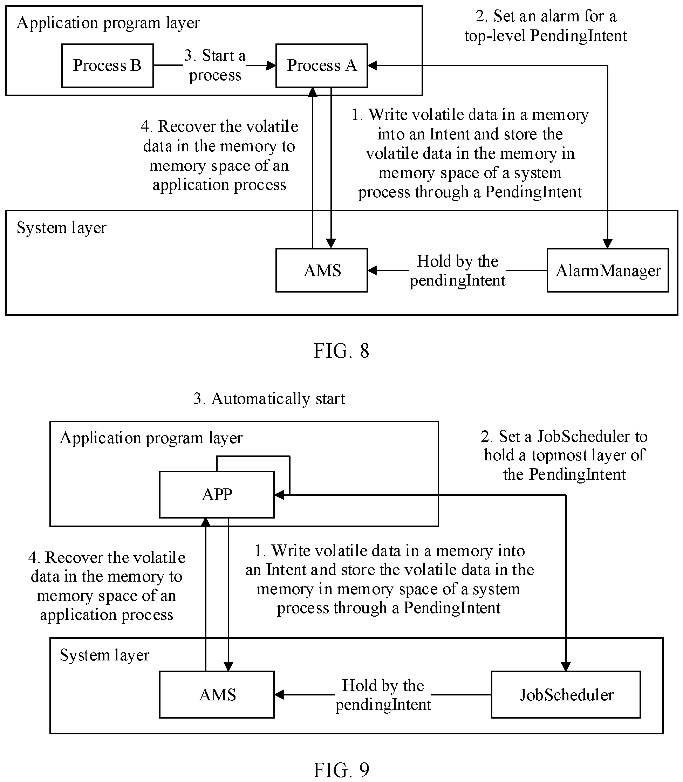

Embodiment 1: An alarm is set by the AlarmManager to hold the PendingIntent for data recovery. Refer to FIG. 8. A process A is responsible for storing and recovering the volatile data in the memory, and a process B is responsible for calling back a dead process A. The main procedure is as follows:
1. After the process A determines to store the data, the to-be-stored volatile data in the memory in Awareness included in an update request is written into the Intent through putExtra, and is stored in memory space of a system process of the AMS through the PendingIntent. The PendingIntent may be generated by using the getBroadcast, getService, or getActivity method based on the FLAG_UPDATE_CURRENT parameter.

For a detailed procedure of this step, refer to FIG. 5 and related description of this step.

2. The ultra-long alarm is set for the top-layer PendingIntent, so that the system may hold the PendingIntent for a long time, to prevent this PendingIntent from being recycled.

3. A death agent of the process A is added to the process B. When the process A is unexpectedly dead, the process B may start the process A after receiving the callback of the dead process A.

4. After an application of the process A is restarted, the PendingIntent stored in the AMS may be obtained by using the getBroadcast, getService, or getActivity method based on the FLAG_NO_CREATE parameter. The stored data may be recovered by exciting the PendingIntent and parsing the Intent.

For a detailed procedure of this step 4, refer to FIG. 7 and related description of this step.

At this time, data of the process A is completely recovered, and the volatile data in the memory of the process A is recovered to a status before an exception occurs. In this embodiment, the ultra-long alarm is set by the AlarmManager to ensure no trigger action occurs. In this way, the PendingIntent can be held. In this way, data that cannot be persistently stored is stored. This successfully resolves the problem that the data is lost after the process is unexpectedly restarted. In this embodiment, in addition to the getActivity method, another method may be unperceivable to the user, and user experience is better.

Embodiment 2: The Job Scheduler is set to hold the PendingIntent for data recovery, as shown in FIG. 9. The following uses an example in which any APP in the Android system is unexpectedly terminated or crashes. The main procedure is as follows:
1. In an APP process, the to-be-stored volatile data in the memory is written into the Intent through putExtra, and is stored in the memory space of the system process of the AMS through the PendingIntent. The PendingIntent may be generated by using the getBroadcast, getService, or getActivity method based on the FLAG_UPDATE_CURRENT parameter.

For a detailed procedure of this step, refer to FIG. 5 and related description of this step.

2. The top-layer PendingIntent is put in transientExtras by setting the JobScheduler, to hold the top-layer PendingIntent in the AMS.

3. The APP is automatically started by setting a mechanism such as a daemon process and broadcast listening.

4. After the APP is restarted, the top-layer PendingIntent in the AMS is obtained by the getBroadcast, getService, or getActivity method based on the FLAG_NO_CREATE parameter. The PendingIntent is excited by using a send method, and the data stored in the Intent is parsed in a corresponding broadcast receiver. At this time, the entire recovery procedure ends.

For a detailed procedure of this step 4, refer to FIG. 7 and related description of this step.

In this embodiment, any APP may recover, by using this method, the volatile data that cannot be persistently stored in the system. For the developer, there is no limitation on a development procedure of the developer. In addition, for the Embodiment 2, in addition to the getActivity method, another method is unperceivable to the user, and user experience is better.

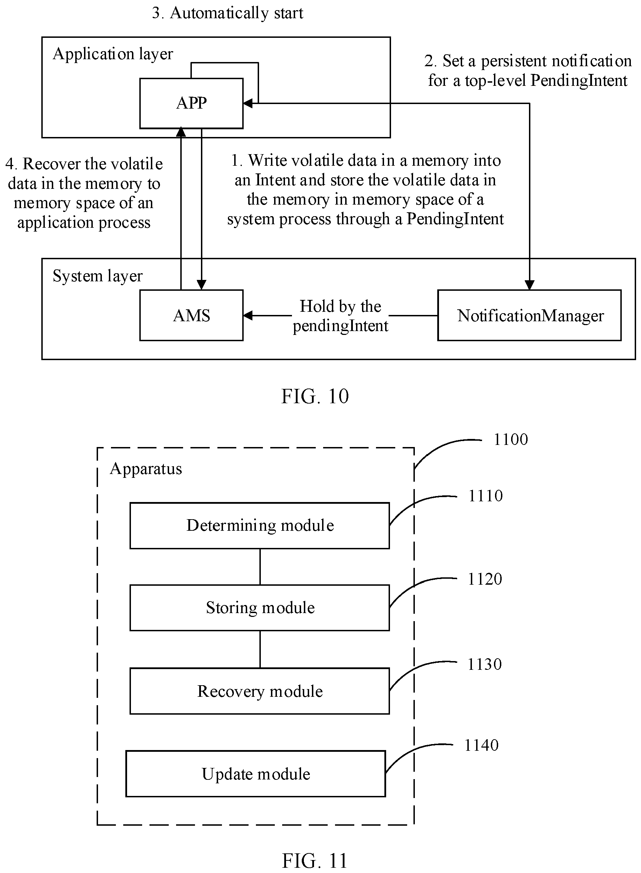

Embodiment 3: A notification is set by the NotificationManager to hold the PendingIntent for data recovery, as shown in FIG. 10. The following uses an example in which any APP in the Android system is unexpectedly terminated or crashes. The main procedure is similar to that in the Embodiment 2. A difference is as follows: In the step 2 in this embodiment, the notification rather than the JobScheduler is set. The main procedure is as follows:
1. In an APP process, the to-be-stored volatile data in the memory is written into the Intent through putExtra, and is stored in the memory space of the system process of the AMS through the PendingIntent. The PendingIntent may be generated by using the getBroadcast, getService, or getActivity method based on the FLAG_UPDATE_CURRENT parameter.

For a detailed procedure of this step, refer to FIG. 5 and related description of this step.

2. One persistent notification is set for the top-layer PendingIntent by the NotificationManager, to hold the PendingIntent in the AMS.

3. The APP is automatically started by setting a mechanism such as a daemon process and broadcast listening.

4. After the APP is restarted, the top-layer PendingIntent in the AMS is obtained by the getBroadcast, getService, or getActivity method based on the FLAG_NO_CREATE parameter. The PendingIntent is excited by using a send method, and the data stored in the Intent is parsed in a corresponding broadcast receiver. At this time, the entire recovery procedure ends.

For a detailed procedure of this step 4, refer to FIG. 7 and related description of this step.

In this embodiment, any APP may recover, by using this method, the volatile data that cannot be persistently stored in the system. For the developer, there is no limitation on the development procedure of the developer. Once the persistent notification is set, the user may find the notification in a drop-down list box of the Android system. Therefore, after the data is recovered according to this embodiment, the entire procedure of storing and recovering the data is perceivable to the user.

The foregoing describes in detail the data recovery method provided in embodiments of this application.

The method provided in any one of the foregoing embodiments of this application may be implemented at an operating system layer 260 and the application program layer 210 shown in FIG. 2.

The foregoing mainly describes the solutions of embodiments of this application from the method perspective. It can be understood that, to implement the foregoing functions, a data recovery apparatus includes a corresponding hardware structure and/or software module for performing the functions. A person skilled in the art should be easily aware that, with reference to units and algorithm steps in the examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on the data recovery apparatus based on the foregoing example of the method. For example, functional units may be divided based on corresponding functions, or two or more than two functions may be integrated into one processing unit. The integrated unit may be implemented in a form of hardware, or may be implemented in a form of a software functional unit. It should be noted that, in embodiments of this application, division into the units is an example, and is merely logical function division.

In actual implementation, another division manner may be used.

For example, when the functional units are divided based on corresponding functions, refer to FIG. 11. An embodiment of this application provides a data recovery apparatus 1100. The apparatus 1100 includes:
a determining module 1110, configured to determine first data, and the first data is application data generated when an application program runs normally;
a storing module 1120, configured to store the first data in a handle record, and the handle record is managed by using a reference count mechanism;
a recovery module 1130, configured to, when the application program is unexpectedly restarted, obtain the handle record, and restore the application program, based on the handle record, to a status before the application program is unexpectedly restarted; and
an update module 1140, configured to, when the application program runs normally, update or delete the first data based on the bucket-based mapping table, to keep the first data consistent with application data in the application program running in a latest status.

For specific implementation of the solutions in the apparatus embodiments, refer to the foregoing method embodiments. Details are not described herein again.

When the functional units (or modules) are integrated into one processing unit, all actions performed by the foregoing functional units may be executed by the processing unit according to a program stored in a storage unit. The processing unit may be a processor or a controller. The storage unit may be a memory. When the processing unit is the processor and the storage unit is the memory, actions performed by the foregoing functional units may be executed by the processor according to the program stored in the memory. For example, FIG. 1 is a schematic diagram of a hardware structure of the data recovery apparatus. The processor may be the processor 150, and the memory may be the memory 180.

An embodiment of this application further provides a computer-readable storage medium, including instructions. When the instructions are run on a computer, the computer is enabled to perform the foregoing methods.

An embodiment of this application further provides a computer program product including instructions. When the instructions are run on a computer, the computer is enabled to perform the foregoing methods.

All or a part of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, all or some of the procedures or functions according to the embodiments of this application are generated. The computer may be a general-purpose computer, a special-purpose computer, a computer network, or another programmable apparatus. The computer instructions may be stored in the computer-readable storage medium or may be transmitted from one computer-readable storage medium to another computer-readable storage medium. For example, the computer instructions may be transmitted from a website, a computer, a server, or a data center to another website, another computer, another server, or another data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD for short)), or the like.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of "a plurality of'. A single processor or another unit may implement several functions enumerated in the claims. Some measures are recorded in dependent claims that are different from each other, but this does not mean that the measures cannot be combined to produce a good effect.

Although this application is described with reference to specific features and embodiments thereof, it is clearly that various modifications and combinations may be made to them without departing from the scope of this application. Correspondingly, the specification and accompanying drawings are merely example descriptions of this application defined by the appended claims, and are considered as any of and all modifications, variations, combinations or equivalents that cover the scope of this application.

## Claims

1. A data recovery method, comprising:
determining first data, wherein the first data is application data generated when an application program runs normally;
storing the first data in a handle record, wherein the handle record is managed by using a reference count mechanism; and
when the application program is unexpectedly restarted, obtaining the handle record and restoring the application program, based on the handle record, to a status before the application program is unexpectedly restarted.

2. The method according to claim 1, wherein the first data is volatile data that is not stored in a memory of an external storage device in a serialization manner.

3. The method according to claim 1, wherein that the handle record is managed by using a reference count mechanism comprises:
referencing the handle record by using a first system interface.

4. The method according to claim 3, wherein the referencing the handle record by using a first system interface comprises:
setting a scheduled job for the handle record, wherein the scheduled job comprises a one-time job or a periodic job; or
setting a trigger condition for the handle record; or
setting a notification job for the handle record, wherein the notification job comprises a persistent notification or a non-persistent notification.

5. The method according to claim 1, wherein the storing the first data in a handle record comprises:
storing the first data in a layer-based and bucket-based manner.

6. The method according to claim 5, wherein the storing the first data in a level-based and bucket-based manner comprises:
establishing a bucket-based mapping table, wherein the bucket-based mapping table comprises a correspondence between at least one keyword and at least one bucket addressing; the keyword is a unique identifier of the first data, and the bucket addressing is a variable pointing to a storage location of the first data; the bucket-based mapping table is used to find a storage location of the first data in a bucket based on the keyword when data is updated or deleted.

7. The method according to claim 6, wherein the bucket addressing comprises:
a bucket number, or
a combination of the bucket number and a bucket key value;
the bucket number is a number of one bucket allocated to the first data, and the bucket key value is a location of the first data in the bucket.

8. The method according to any one of claims 5 to 7, wherein the referencing the handle record by using a first system interface comprises:
referencing, by using the first system interface, a topmost layer of the first data stored in the layer-based and bucket-based manner.

9. The method according to any one of claims 6 to 8, wherein the method further comprises:
when the application program runs normally, updating or deleting the first data based on the bucket-based mapping table, to keep the first data consistent with application data in the application program running in a latest status.

10. The method according to claim 1, wherein when the application program is unexpectedly restarted, the obtaining the handle record, and restoring the application program, based on the handle record, to a status before the application program is unexpectedly restarted comprises:
obtaining the handle record of the application program by using a second system interface based on an application identifier, wherein the application identifier is a unique identifier used to identify the application program; and
parsing the handle record, and recovering data in the handle record to the application program.

11. A data recovery apparatus, comprising a determining module, a storing module, and a recovery module, wherein:
the determining module is configured to determine first data, and the first data is application data generated when an application program runs normally;
the storing module is configured to store the first data in a handle record, and the handle record is managed by using a reference count mechanism; and
the recovery module is configured to, when the application program is unexpectedly restarted, obtain the handle record, and restore the application program, based on the handle record, to a status before the application program is unexpectedly restarted.

12. The data recovery apparatus according to claim 11, wherein the first data is volatile data that is not stored in a memory of an external storage device in a serialization manner.

13. The data recovery apparatus according to claim 11 or 12, wherein the storing module is specifically configured to:
reference the handle record by using a first system interface.

14. The data recovery apparatus according to claim 13, wherein the storing module is specifically configured to:
set a scheduled job for the handle record, wherein the scheduled job comprises a one-time job or a periodic job; or
set a trigger condition for the handle record; or
set a notification job for the handle record, wherein the notification job comprises a persistent notification or a non-persistent notification.

15. The data recovery apparatus according to claim 14, wherein the storing module is specifically configured to:
store the first data in a layer-based and bucket-based manner.

16. The data recovery apparatus according to claim 15, wherein the storing module is specifically configured to:
establish a bucket-based mapping table, wherein the bucket-based mapping table comprises a correspondence between at least one keyword and at least one bucket addressing; the keyword is a unique identifier of the first data, and the bucket addressing is a variable pointing to a storage location of the first data; and the bucket-based mapping table is used to find a storage location of the first data in a bucket based on the keyword when data is updated or deleted.

17. The data recovery apparatus according to claim 16, wherein the bucket addressing comprises:
a bucket number, or
a combination of the bucket number and a bucket key value;
the bucket number is a number of one bucket allocated to the first data, and the bucket key value is a location of the first data in the bucket.

18. The data recovery apparatus according to any one of claims 15 to 17, wherein the storing module is specifically configured to:
reference, by using the first system interface, a topmost layer of the first data stored in a layer-based and bucket-based manner.

19. The data recovery apparatus according to any one of claims 16 to 18, further comprising an update module, wherein
the update module is configured to:
when the application program runs normally, update or delete the first data based on the bucket-based mapping table, to keep the first data consistent with application data in the application program running in a latest status.

20. The data recovery apparatus according to claim 11, wherein the recovery module is specifically configured to:
obtain the handle record of the application program by using a second system interface based on an application identifier, wherein the application identifier is a unique identifier used to identify the application program; and
parse the handle record, and recover data in the handle record to the application program.

21. A terminal, wherein the terminal comprises a processor and a memory; the memory is configured to store a software program, and the processor is configured to read the software program stored in the memory to perform the data recovery method according to any one of claims 1 to 10.

22. A storage medium, comprising a computer program, wherein when running on one or more processors, the computer program is configured to implement the data recovery method according to any one of claims 1 to 10.

23. A computer program product, comprising a computer program, wherein the computer program is configured to, when running on one or more processors, implement the data recovery method according to any one of claims 1 to 10.
